# EUROPÄISCHE PATENTSCHRIFT

(11) **EP 3 825 462 B1**
(45) Veröffentlichungstag und Bekanntmachung des Hinweises auf die Patenterteilung: **21.09.2022**
(21) Anmeldenummer: 20208813.4
(22) Anmeldetag: 20.11.2020
(51) Int. Cl.: E01C 23/088

(54) **SELBSTFAHRENDE BAUMASCHINE UND VERFAHREN ZUR BESTIMMUNG DER NUTZUNG EINER BAUMASCHINE**
SELF-PROPELLED CONSTRUCTION MACHINE AND METHOD FOR DETERMINING THE USE OF A CONSTRUCTION MACHINE
MACHINE DE CONSTRUCTION AUTONOME ET PROCÉDÉ DE DÉTERMINATION DE L'UTILISATION D'UNE MACHINE DE CONSTRUCTION

(30) Priorität: 20.11.2019 DE 102019131353
(43) Veröffentlichungstag der Anmeldung: 26.05.2021
(73) Patentinhaber: Wirtgen GmbH, 53578 Windhagen (DE)
(72) Erfinder: Wagner, Stefan, 53604 Bad Honnef (DE)
(74) Vertreter: dompatent von Kreisler Selting Werner - Partnerschaft von Patent- und Rechtsanwälten mbB

(56) Entgegenhaltungen:
- EP-B1- 2 716 816
- DE-A1-102016 006 351
- DE-U1- 9 204 614

## Beschreibung

Die Erfindung betrifft eine selbstfahrende Baumaschine nach Anspruch 1, sowie ein Verfahren zum Bestimmen der Nutzung einer eine Arbeitseinrichtung aufweisenden Baumaschine nach Anspruch 10.

Beim Bearbeiten von Boden oder Verkehrsflächen mittels Fräsmaschinen, Stabilisieren oder Recyclern sowie beim Abbau von Vorkommen mittels Abbaumaschinen (Surface Minern) wird für die Dokumentation und die Abrechnung der Dienstleistung auf der Baustelle die Nutzung der jeweiligen eine Arbeitseinrichtung aufweisenden Baumaschine bestimmt werden. Dafür wird üblicherweise das gefräste Volumen und/oder die gefräste Fläche als Basis für die Abrechnung der Dienstleistung bestimmt.

Gemäß dem Stand der Technik sind selbstfahrende Baumaschinen, insbesondere Straßenfräsmaschinen, Recycler, Stabilisierer oder Surface Miner bekannt, die einen Maschinenrahmen, zumindest drei Fahreinrichtungen, zumindest eine Arbeitseinrichtung, insbesondere eine Fräswalze, zum Bearbeiten des Bodenbelags aufweisen. Ferner weisen diese Baumaschinen mindestens eine Profilsensoreinrichtung zum Messen mindestens eines quer zur Fahrtrichtung verlaufenden Bodenbelagsprofils auf, wobei die Profilsensoreinrichtung in Fahrtrichtung vor der Arbeitseinrichtung angeordnet ist. Es kann ferner eine Auswerteeinrichtung und eine mit dieser verbundenen Speichereinrichtung vorgesehen sein, wobei die Auswerteeinrichtung mit der Profilsensoreinrichtung in Verbindung steht und die von der Profilsensoreinrichtung gemessenen Bodenbelagsprofildaten in der Speichereinrichtung gespeichert werden.

Bei der EP2716816B1 erfolgt die Bestimmung des Fräsvolumens derart, dass die Baumaschine ein Profilparameter der Bodenoberfläche vor der Fräswalze unter Verwendung mindestens eines Profilsensors erfasst. Ferner wird mindestens ein Entfernungsparameter erfasst, welcher einer von der Baumaschine zurückgelegten Entfernung entspricht und es wird ein Tiefenparameter bestimmt, der eine Frästiefe der Fräswalze entspricht. Dann wird das Volumen des Fräsmaterials zumindest teilweise in Abhängigkeit von dem Profilparameter des Tiefenparameters und des Entfernungsparameters bestimmt.

Es besteht jedoch weiterhin ein Problem, dass diese Bestimmung ungenau ist.

Es besteht somit die Aufgabe, die Nutzung einer eine Arbeitseinrichtung aufweisenden Baumaschine genauer zu bestimmen.

Zur Lösung dieser Aufgabe dienen die Merkmale der Ansprüche 1 und 10.

Die Erfindung sieht in vorteilhafter Weise vor, dass die Profilsensoreinrichtung an zumindest einem ersten Ort Bodenbelagprofildaten misst, wobei zumindest eine zweite Sensoreinrichtung vorgesehen ist, die, nachdem die Baumaschine eine Strecke entsprechend dem Abstand zwischen der Arbeitseinrichtung und der Profilsensoreinrichtung zurückgelegt hat, an dem ersten Ort zumindest einen Abstandswert zwischen Bodenoberfläche und Arbeitseinrichtung bestimmt, wobei die Auswerteeinrichtung, die in der Speichereinrichtung gespeicherten an dem zumindest einen ersten Ort gemessenen Bodenbelagsprofildaten zu dem zumindest einen an dem ersten Ort mittels der zweiten Sensoreinrichtung gemessenen Abstandswert referenziert.

Bei den Baumaschinen gemäß dem Stand der Technik besteht häufig das Problem, dass selbst, wenn Profilsensoreinrichtungen verwendet werden, diese in Fahrtrichtung einen Abstand zu der eigentlichen Arbeitseinrichtung aufweisen und Relativbewegungen zwischen Maschine und Bodenoberfläche während der Vorwärtsbewegung der Maschine nicht bei der Profilermittlung berücksichtigt werden. Es wird somit das Profil des Bodenbelags nicht an der Stelle ermittelt, die eigentlich zur genauen Bestimmung des abgearbeiteten Volumens von Nutzen wäre. Insbesondere kann es dabei zu Abweichungen kommen, wenn die Baumaschine eine Längsneigung aufweist oder sich diese Längsneigung während der Zeit ändert, in der sich die Baumaschine um eine Strecke fortbewegt, die dem Abstand zwischen der Arbeitseinrichtung und der Profilsensoreinrichtung entspricht.

Bei Fräsmaschinen gemäß des Standes der Technik erfolgen die Messung des Profils des Bodenbelags und die Bestimmung der Frästiefe zum gleichen Zeitpunkt, d. h. dass die dem aktuell gemessenen Profil zugeordnete Frästiefe entspricht nicht zwangsweise der Frästiefe, die eingestellt ist, wenn an der Stelle des gemessenen Profils gefräst wird.

Neben sich ändernder Längsneigung kann auch eine sich im Verlauf des Fräsvorgangs (insbesondere während des Zurücklegens der Strecke zwischen Ort der Profilmessung und Ort der Fräsarbeit) ändernde Frästiefe zu einem Berechnungsfehler führen.

Diese Frästiefenänderung kann sich dadurch ergeben, dass sich die vorgegebene Frästiefe ändert. Dies kann z. B. dann Auftreten, wenn eine unebene Fräsfläche (z. B. mit Längswellen) bearbeitet wird, um einen ebenen Straßenbelag herzustellen.

Bei der vorliegenden Erfindung werden diese Nachteile jedoch behoben und die vorliegende Erfindung hat somit den Vorteil, dass das Volumen wesentlich genauer bestimmt werden kann.

Die Profilsensoreinrichtung kann vorzugsweise berührungslose Mittel zur Entfernungsmessung beispielsweise Lasersensoren oder auch Ultraschalsensoren aufweisen, die den Abstand zum Boden detektieren können. Grundsätzlich kann jeder geeignete Sensor zur Entfernungsmessung als Profilsensor oder Bestandteil des Profilsensors eingesetzt werden. So können z. B. auch Sensoren die Verfahren zur Laufzeitmessung (Time-of-flight), wie beispielsweise PMD (Photomischdetektor)-Sensor genutzt werden.

Die zumindest eine zweite Sensoreinrichtung kann den Abstandswert zwischen Bodenoberfläche und Arbeitseinrichtung direkt oder auch indirekt bestimmen.

Die zumindest eine zweite Sensorvorrichtung kann vor Beginn des Fräsvorganges kalibriert werden. Dies kann insbesondere dadurch erfolgen, dass die Fräswalze soweit abgesenkt wird bis die Fräsmeißel den Boden berühren ohne bereits Fräsarbeit zu verrichten und in der zweiten Sensoreinrichtung der aktuelle erfasste Wert als Frästiefe Null gespeichert wird. Ein Absenken der Fräswalze führt somit zu einer Erhöhung der Frästiefe (Frästiefe größer Null, wenn die Fräswalze weiter als bis zur Bodenberührung abgesenkt wird) ein Anheben der Fräswalze führt zu einer Verringerung der Frästiefe.

Der Abstandswert zwischen Bodenoberfläche und Arbeitseinrichtung versteht sich hierbei zum tiefsten Punkt der Arbeitseinrichtung, da die erreichte Frästiefe von diesem Punkt abhängt. Der tiefste Punkt der Arbeitseinrichtung ist im Sinne der vorliegenden Erfindung so zu verstehen, dass dies der Punkt der Arbeitseinrichtung ist, der bei einer ebenen Bodenoberfläche und wenn die Arbeitseinrichtung noch nicht in den Boden eingreift, der Punkt ist, der den geringsten Abstand zur Bodenoberfläche aufweist.

Der Abstand zwischen der Arbeitseinrichtung und der Profilsensoreinrichtung ist somit als Abstand zwischen der Profilsensoreinrichtung und dem tiefsten Punkt der Arbeitseinrichtung, von dem die Frästiefe abhängt zu verstehen. Bei im Wesentlichen parallel zur Bodenoberfläche ausgerichtetem Maschinenrahmen also dem Abstand zwischen Profilsensoreinrichtung und Rotationsachse der Fräswalze.

Die zumindest eine zweite Sensoreinrichtung kann den Abstandswert zwischen Bodenoberfläche und Arbeitseinrichtung indirekt durch Messen des Abstandswertes zwischen Bodenoberfläche und einem Teil des Maschinenrahmens ermitteln.

Diese Ermittlung erfolgt insbesondere dann indirekt, wenn die Arbeitseinrichtung starr an dem Maschinenrahmen gelagert ist und durch die Höhenverstellung des Maschinenrahmens auch die Arbeitseinrichtung höhenverstellt wird.

Die zumindest eine zweite Sensoreinrichtung kann den Abstand zu einer Bodenoberfläche erfassen, die in Fahrtrichtung neben der Arbeitseinrichtung angeordnet sein kann.

Der zumindest eine Abstandswert zwischen Bodenoberfläche und Arbeitseinrichtung kann auf einer Bodenoberfläche erfolgen, die neben der Arbeitseinrichtung angeordnet ist. Diese Bodenoberfläche kann die ungefräste oder auch die bereits in einem vorherigen Arbeitsschritt gefräste Bodenoberfläche sein.

Es ist gemäß der vorliegenden Erfindung lediglich entscheidend, dass die Profilsensoreinrichtung wenigstens einen Punkt erfasst, der mit der zweiten Sensoreinrichtung referenziert werden kann. Beispielsweise kann, wenn die zweite Sensoreinrichtung einen Bereich neben der Arbeitseinrichtung abtastet/erfasst die Profilsensoreinrichtung einen Bereich außerhalb der Breite der Arbeitseinrichtung erfassen, damit dieser Bereich, wenn sich die Baumaschine um eine Strecke fortbewegt hat, die dem Abstand zwischen der Arbeitseinrichtung und der Profilsensoreinrichtung entspricht, von der zweiten Sensoreinrichtung abgetastet/erfasst werden kann. Die zweite Sensoreinrichtung kann jedoch auch einen Bereich innerhalb der Breite der Arbeitseinrichtung erfassen. In diesem Fall muss die Profilsensoreinrichtung lediglich einen Bereich erfassen, der eine Breite aufweist, die der Breite der Arbeitseinrichtung entspricht. Eine indirekte Erfassung kann z. B. bei einer Fräswalze dann erfolgen, wenn beispielsweise die Position der äußersten rechten Kante des gefrästen Bereichs in Bezug zu einem Kantenschutz bekannt ist, über den dann indirekt die Position der äußeren Kante des gefrästen Bereichs bezogen auf den Maschinenrahmen erfassbar ist. Der Kantenschutz ist neben der Arbeitseinrichtung angeordnet. Der Kantenschutz liegt in Schwimmstellung auf dem Bodenbelag auf, d. h. er folgt der Kontur des Bodenbelags aufgrund von Eigengewicht oder aufgebrachten Drucks, um das Fräswalzengehäuse nach außen abzuschirmen, um z.B. Unfälle / Austreten von Material zu verhindern. In oder an dem Kantenschutz kann ein Seilzugsensor oder auch ein Hydraulikzylindersensor vorgesehen sein, der die Veränderung in der Bewegung des Kantenschutzes bezogen auf den Maschinenrahmen feststellt.

Erreicht die zweite Sensoreinrichtung den ersten Ort, wird an diesem ersten Ort der Abstand der Arbeitseinrichtung zur Bodenoberfläche, ggf. indirekt über den Abstand des Maschinenrahmens relativ zu der Bodenoberfläche bestimmt, die bereits mit der ersten Profilsensoreinrichtung erfasst wurde.

Damit kann wenigstens einem Punkt des von der Profilsensoreinrichtung gemessenen Bodenbelagsprofils ein konkreter Abstand der Arbeitseinrichtung zur Bodenoberfläche zugeordnet werden.

Die zumindest eine zweite Sensoreinrichtung kann zumindest den Abstand zwischen Maschinenrahmen (oder Arbeitseinrichtung) und einem Punkt auf einer Bodenoberfläche bestimmen, wobei der Punkt auf der Bodenoberfläche auf einem bereits gefrästen Bereich oder auf einem noch ungefrästen Bereich liegen kann. Es kann somit ein Messwert der Profilsensoreinrichtung mit der Frästiefe referenziert oder korreliert werden. Dies bedeutet, dass die Messwerte (Abstandswerte der Profilsensoreinrichtung von der Bodenoberfläche) der Profilsensoreinrichtung nun über die gesamte Fräsbreite in Frästiefen umgerechnet werden können.

Liegt beispielsweise der Punkt, der von der zweiten Sensoreinrichtung erfasst wird und zur Referenzierung herangezogen wird, auf einem bereits gefrästen Bereich, der nicht noch weiter abgefräst wird und somit einer Frästiefe von Null entspricht, können die Messwerte der Profilsensoreinrichtung dergestalt ausgewertet werden, dass ein an diesem Punkt gemessener Abstand zwischen Profilsensoreinrichtung und Bodenoberfläche für das entsprechend auszuwertende Bodenbelagsprofil als Frästiefe Null aufgefasst wird.

Wird an einer Stelle des Profils ein um den Wert S geringerer Abstand zwischen Profilsensoreinrichtung und Bodenoberfläche gemessen, ist an dieser Stelle eine Frästiefe von S anzunehmen.

Liegt der von der zweiten Sensoreinrichtung erfasste Punkt auf noch ungefrästem Untergrund bzw. Untergrund, der noch weiter bearbeitet wird, liefert die zweite Sensoreinrichtung für genau diesen Punkt einen konkreten Wert für die Frästiefe, beispielsweise Y.

Der an dieser Stelle von der Profilsensoreinrichtung gemessene Abstand der Profilsensoreinrichtung von der Bodenoberfläche wird somit für das entsprechend auszuwertende Bodenbelagsprofil mit der Frästiefe von Y referenziert.

Alle in dieser Profilmessung vorhandenen Abstandswerte von Profilsensoreinrichtung zur Bodenoberfläche können dementsprechend referenziert werden Ein Abstand zur Bodenoberfläche, der um den Wert Z geringer ist als Y entspricht einer Frästiefe Y+Z und jeder Abstand, der um den Wert Z größer ist als Y entspricht einer Frästiefe Y-Z

Hierzu ist es dann besonders vorteilhaft, wenn, während die Baumaschine die Strecke zurücklegt, die dem Abstand zwischen Profilsensoreinrichtung und zweiter Sensoreinrichtung entspricht, die Änderung der Querneigung der Maschine erfasst wird und diese Änderung der Querneigung zwischen Erfassung der Bodenbelagsprofildaten und Erfassung eines Abstandswertes zwischen Bodenoberfläche und Arbeitseinrichtung mit der zweiten Sensoreinrichtung bei der Referenzierung des gemessenen Profils berücksichtigt wird.

Im vorliegenden Fall wird der Begriff "referenzieren" somit so verstanden, dass die mit der Profilsensoreinrichtung gemessenen Bodenbelagsprofildaten zu der Position der Arbeitseinrichtung in Bezug gesetzt werden.

Durch die Referenzierung des mittels der Profilsensoreinrichtung ermittelten Bodenbelagsprofils mit den von der mindestens einen Sensoreinrichtung ermittelten Abstandswerten lässt sich ein tatsächlich abgearbeitete Bodenbelagsquerschnitt an einer bestimmten Position ermitteln. Der abgearbeitete Bodenbelagsquerschnitt multipliziert mit der Weglänge zwischen Stellen an denen der Bodenbelagsquerschnitt bestimmt wurde, ergibt ein Teilvolumen. Durch Aufsummieren mehrerer auf diese Weise ermittelter Teilvolumina kann ein Gesamtvolumen bestimmt werden und somit die Arbeitsleistung der Baumaschine ermittelt werden.

Die zumindest eine zweite Sensoreinrichtung kann an einem neben der Arbeitseinrichtung angeordneten Kantenschutz angeordnet sein. In dem Kantenschutz kann ein Seilzugsensor oder auch ein Hydraulikzylindersensor vorgesehen sein, der die Veränderung in der Bewegung des Kantenschutzes bezogen auf den Maschinenrahmen feststellt.

Der Kantenschutz liegt in Schwimmstellung auf dem Bodenbelag auf. Wird die Frästiefe erhöht senkt sich die Arbeitseinrichtung und damit der Maschinenrahmen relativ zur Bodenoberfläche ab, da der Kantenschutz auf der Bodenoberfläche aufliegt wird er relativ zum Maschinenrahmen angehoben und ermöglicht somit eine Bestimmung der Frästiefe, bzw. des Abstands der Arbeitseinrichtung zur Bodenoberfläche.

Es können zumindest zwei zweite Sensoreinrichtungen vorgesehen sein, die jeweils einen Abstandswert zwischen Bodenoberfläche und Arbeitseinrichtung messen.

Die zwei zweiten Sensoreinrichtungen können beispielsweise jeweils an einem Kantenschutz auf der rechten und auf der linken Seite der Arbeitseinrichtung angeordnet sein, um jeweils den Abstand der Arbeitseinrichtung zum Bodenbelag, bzw. die Frästiefe, auf der rechten und der linken Seite der Arbeitseinrichtung zu bestimmen. Dies ist insbesondere dann interessant, wenn die Baumaschine eine Querneigung aufweist.

Zusätzlich zu der zumindest einen zweiten Sensoreinrichtung, die den zumindest einen Abstandswert bestimmt, kann auch zumindest ein Längs- und/oder Querneigungssensor vorgesehen sein, wobei die Auswerteeinrichtung die Längs- und/oder Querneigung zusätzlich zu dem zumindest einen Abstandswert zur Referenzierung heranzieht.

Der Erfassungsbereich der Profilsensoreinrichtung kann eine Breite aufweisen, die zumindest der Breite der Arbeitseinrichtung entspricht.

Die Profilsensoreinrichtung kann mehrere nebeneinander angeordnete Abstandssensoren, insbesondere Lasersensoren aufweisen.

Es kann zumindest ein Entfernungssensor zum Erfassen der von der Baumaschine zurückgelegten Entfernung vorgesehen sein. Ein Entfernungssensor kann beispielsweise ein Sensor sein, der die Drehzahl einer, aller oder der Fahreinrichtung, die am langsamsten dreht, erfasst. Drehzahlsensoren können beispielsweise Pickup Sensoren sein. Alternativ kann am dem Maschinenrahmen ein sich mitdrehendes Laufrad angeordnet sein, das auf der Bodenoberfläche abrollt. Durch Erfassung der Drehzahl dieses Rades kann auch die Entfernung bestimmt werden Als weitere Alternative können auch GNSS Sensoren zur Ermittlung der zurückgelegten Strecke verwendet werden.

Es kann ferner gemäß der vorliegenden Erfindung ein Verfahren zum Bestimmen der Nutzung einer eine Arbeitseinrichtung, insbesondere Fräswalze, aufweisenden Baumaschine vorgesehen sein, wobei die Arbeitseinrichtung an einem Maschinenrahmen der Baumaschine angeordnet ist, wobei das Verfahren die folgenden Schritte aufweist:
- Erfassen mindestens eines quer zur Fahrtrichtung der Baumaschine verlaufenden Bodenbelagsprofils in Fahrtrichtung vor der Arbeitseinrichtung unter Verwendung mindestens einer Profilsensoreinrichtung,
- Speichern der gemessenen Bodenbelagsprofildaten.

Dabei ist erfindungsgemäß vorgesehen, dass an zumindest einem ersten Ort Bodenbelagsprofildaten mittels der Profilsensoreinrichtung gemessen werden, wobei mittels zumindest einer zweiten Sensoreinrichtung, nachdem die Baumaschine eine Strecke entsprechend dem Abstand zwischen Arbeitseinrichtung und der Profilsensoreinrichtung zurückgelegt hat, an dem zumindest einen ersten Ort zumindest ein Abstandswert zwischen Bodenoberfläche und Arbeitseinrichtung gemessen wird, wobei die von der Profilsensoreinrichtung an dem zumindest einen ersten Ort gemessenen Bodenbelagsprofildaten zu dem zumindest einen Abstandswert referenziert werden.

Die Messung des zumindest einen Abstandswertes mit der zweiten Sensoreinrichtung kann an zumindest einem Kantenschutz erfolgen.

Es können zumindest zwei Abstandswerte an dem ersten Ort mittels zumindest zwei zweiter Sensoreinrichtung gemessen werden und zur Referenzierung herangezogen werden.

Auf diese Weise können auch Ungenauigkeiten, die durch eine veränderte Querneigung entstehen herausgerechnet werden.

Zusätzlich zu dem zumindest einen Abstandswert kann zumindest eine Längs- und/oder Querneigung gemessen werden und zur Referenzierung herangezogen werden.

Dies kann alternativ zu der zumindest zweiten zweiten Sensoreinrichtung erfolgen. Es kann somit auch lediglich ein Sensor zur Abstandswertbestimmung und ein Längs- und/oder Querneigungssensor vorgesehen sein.

Die von der Baumaschine zurückgelegte Entfernung kann erfasst werden.

Der zumindest eine Abstandswert zwischen Bodenoberfläche und Arbeitseinrichtung kann direkt oder indirekt gemessen werden.

Im Folgenden wird unter Bezugnahme auf die Zeichnungen Ausführungsbeispiele der vorliegenden Erfindung näher erläutert.

Es zeigen schematisch:
- Fig. 1: eine Baumaschine gemäß der vorliegenden Erfindung,
- Fig. 2: eine Ansicht auf die Baumaschine 1, gemäß Figur 1 mit dargestelltem zu fräsendem Bereich,
- Fig. 3: Darstellung der Bodenprofildaten der Profilsensoreinrichtung an dem ersten Ort X,
- Fig. 4: eine Bodenbelagsprofil an der Stelle X,
- Fig. 5: die Arbeitseinrichtung, wenn diese sich an dem ersten Ort X befindet,
- Fig. 6: Bodenbelagsprofil bei einer Stelle X, wenn die zweite Sensoreinrichtung sich dort befindet.

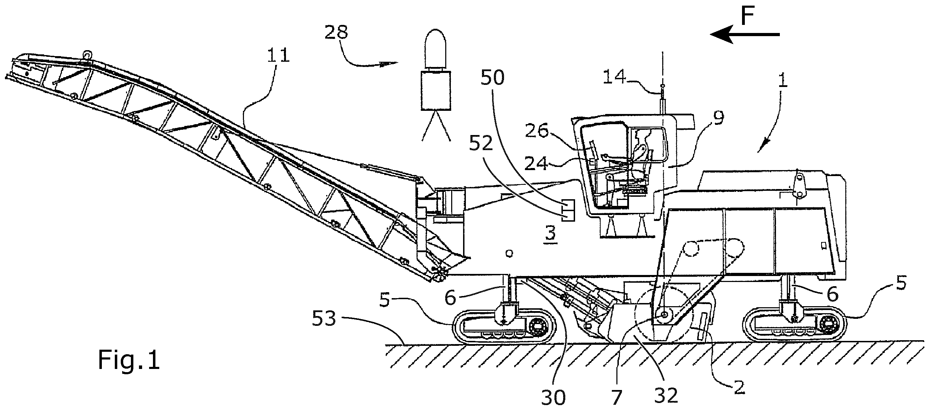

Fig. 1 zeigt eine selbstfahrende Baumaschine 1. Die Baumaschine 1 kann, insbesondere eine Straßenfräsmaschine, ein Recycler, ein Stabilisierer oder ein Surface Miner sein. Im dargestellten Ausführungsbeispiel ist eine Straßenfräsmaschine dargestellt. Mit Straßenfräsmaschinen können beispielsweise bestehende Bodenbelege von Straßen abgetragen werden. Mit Recyclern können bestehende Bodenbeläge aufgearbeitet werden. Die Stabilisierer dienen der Vorbereitung des Unterbaus für den Straßenbau. Mit Surface Minern können Kohle und Gestein abgetragen werden.

Die in Fig. 1 gezeigte Baumaschine 1 weist einen Maschinenrahmen 3 auf, der über Fahreinrichtungen 5 getragen ist. Die Fahreinrichtungen 5 können Kettenlaufwerke oder Räder sein. Ferner weist die Baumaschine 1 zumindest eine Arbeitseinrichtung 2 auf. Im dargestellten Ausführungsbeispiel ist die Arbeitseinrichtung 2 eine Fräswalze. Mittels der Arbeitseinrichtung 2 kann der Bodenbelag 53 bearbeitet werden. Im dargestellten Ausführungsbeispiel ist die Arbeitseinrichtung 2 starr an dem Maschinenrahmen 3 gelagert. Die Fahreinrichtungen 5 können über Hubsäulen 6 höhenverstellt werden. Auf diese Weise kann der Maschinenrahmen 3 höhenverstellt werden. Die Arbeitseinrichtung 2 wird zusammen mit dem Maschinenrahmen 3 höhenverstellt. Alternativ können die Fahreinrichtungen 5 auch starr an dem Maschinenrahmen 3 befestigt sein und/oder die Arbeitseinrichtung 2 kann relativ zum Maschinenrahmen 3 höhenverstellbar sein. Das abgefräste Material kann über eine Transporteinrichtung 11 abtransportiert werden. Um die Arbeitseinrichtung 2 herum ist ein Fräswalzenkasten angeordnet, der in Fahrtrichtung F gesehen neben der Arbeitseinrichtung 2, jeweils einen Katenschutz 32 aufweist, der auf dem Boden aufliegt.

In Fig. 1 ist ferner eine Profilsensoreinrichtung 30 dargestellt, die zum Messen zumindest eines quer zur Fahrtrichtung verlaufenden Bodenbelagsprofil vorgesehen ist, wobei die Profilsensoreinrichtung 30 in Fahrtrichtung F vor der Arbeitseinrichtung 2 angeordnet ist.

Ferner ist eine Auswerteeinrichtung 50 vorgesehen und eine mit dieser verbundenen Speichereinrichtung 52. Die Speichereinrichtung 52 kann auch integriert in der Auswerteeinrichtung 50 ausgebildet sein. Die Auswerteeinrichtung 50 steht mit der Profilsensoreinrichtung 30 in Verbindung, und speichert die von der Profilsensoreinrichtung 30 gemessenen Bodenbelagsprofildaten in der Speichereinrichtung 52. Die Auswerteeinrichtung 50 und/oder die Speichereinrichtung 52 können in der Maschinensteuerung 24 der Baumaschine 1 integriert sein oder auch separat davon ausgebildet sein. Die Auswerteeinrichtung 50 und die Speichereinrichtung 52 sowie die Maschinensteuerung 24 können vorzugsweise direkt an der Baumaschine 1 angeordnet sein oder auch alternativ extern von der Baumaschine 1 vorgesehen sein und lediglich mit dieser in Verbindung stehen. Die Daten können auch extern gespeichert und ausgewertet werden, um so Daten von mehreren erfindungsgemäßen Baumaschine auswerten zu können. Hierzu können Daten drahtlos, insbesondere über Funk, WLAN, Mobilfunknetze an eine zentrale Datenverarbeitungsvorrichtung/Auswerte- und/oder Speichereinrichtung übertragen werden.

Die Baumaschine 1 kann ferner einen Fahrerstand 9, der in Fig. 1 als Kabine ausgebildet ist, aufweisen. In dem Fahrerstand 9 sitzt oder steht eine Bedienungsperson, die mithilfe einer Maschinensteuerung 24 die Funktionen der Baumaschine ansteuert. Die Baumaschine 1 kann ferner mit einer Positionsbestimmungseinrichtung 26 ausgebildet sein, zur Bestimmung der genauen Baumaschinenposition. Dafür kann auf dem Fahrerstand 9 z.B. ein GNSS-Empfänger 14 als Teil der Positionsbestimmungseinrichtung 26 angeordnet sein. Als weitere Alternative zur Bestimmung der Position der Baumaschine kann auch eine Totalstation 28 verwendet werden, die der Maschine als Referenzpunkt dienen kann und allein oder in Verbindung mit einem GNSS-System zur Bestimmung der Position genutzt werden kann.

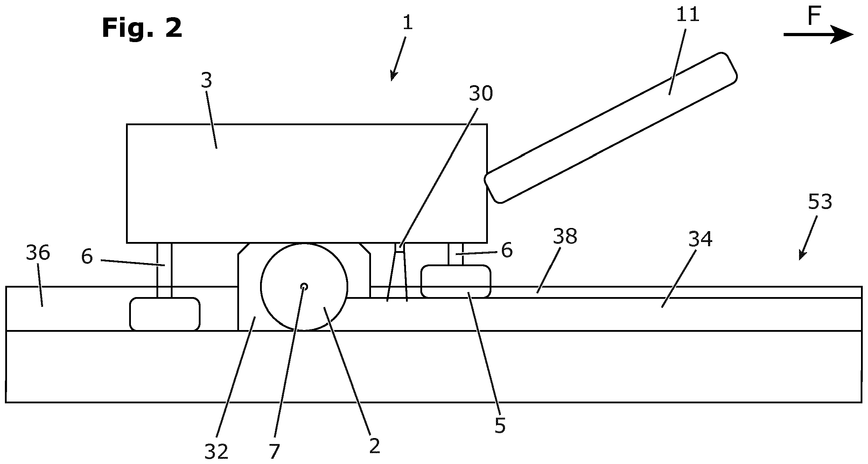

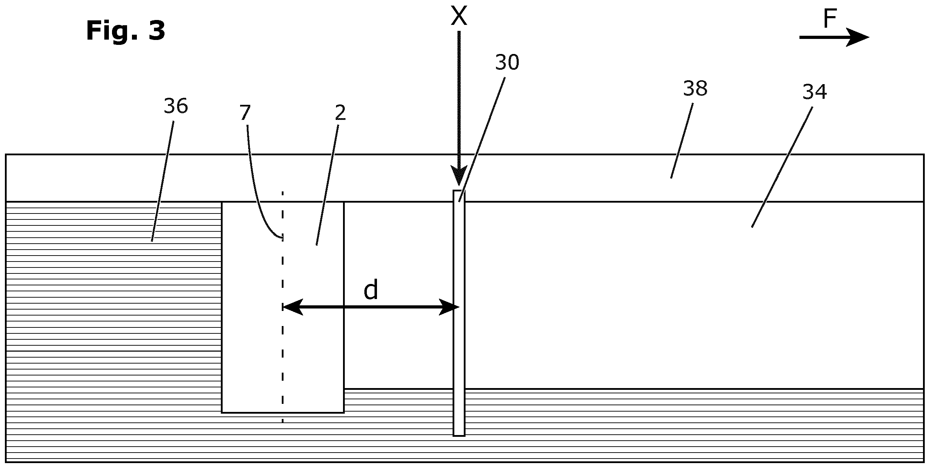

Die Profilsensoreinrichtung 30 kann an zumindest einem ersten Ort X Bodenprofildaten messen. Dies ist insbesondere in Fig. 2 und 3 näher dargestellt. Wie Fig. 2 zu entnehmen ist, wird die Baumaschine 1 in Fahrtrichtung F fortbewegt. Die Profilsensoreinrichtung 30 ist in Fahrtrichtung F vor der Arbeitseinrichtung 2 angeordnet. Die Arbeitseinrichtung 2 bearbeitet den noch unbearbeiteten Bereich 34 des Bodenbelags. Im vorliegenden Fall fräst die Arbeitseinrichtung 2 den noch ungefrästen Bereich 34 bei Fortbewegung der Baumaschine 1. In Fahrtrichtung F hinter der Baumaschine 1 befindet sich der bearbeitete oder gefräste Bereich 36. In Fahrtrichtung F neben der Baumaschine ist auf einer Seite ein unbearbeiteter oder ungefräster Bereich 38, hierbei kann es sich beispielsweise um eine Bordsteinkante handeln. Dies ist auch näher in Fig. 3 dargestellt. An dem zumindest einen ersten Ort X werden die Bodenprofildaten mittels der Profilsensoreinrichtung 30 bestimmt. Die Arbeitseinrichtung 2 weist einen Abstand d zu der Profilsensoreinrichtung 30 auf. Der Abstand d wird im Wesentlichen zwischen der Achse 7 der Arbeitseinrichtung 2 und der Profilsensoreinrichtung 30 bestimmt. Der Messbereich der Profilsensoreinrichtung 30 weist vorzugsweise zumindest eine solche Breite auf, der größer ist als die Breite der Arbeitseinrichtung 2.

Die Profilsensoreinrichtung 30 weist vorzugsweise berührungslose Mittel zur Entfernungsmessung beispielsweise Lasersensoren oder auch Ultraschalsensoren, die den Abstand zum Boden detektieren können.

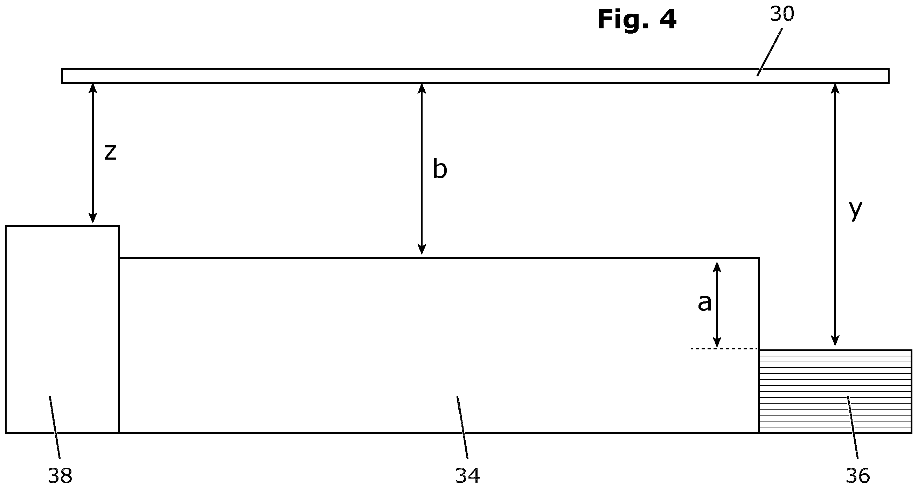

In Fig. 4 ist ein Bodenbelagsprofil dargestellt, das an der Stelle X erfasst worden ist. Daraus können die Abstände von der Profilsensoreinrichtung 30 zur Bodenoderfläche entnommen werden. Auf der im Ausführungsbeispiel dargestellten linkten Seite erfasst die Profilsensoreinrichtung 30 den Abstand z zum ungefrästen Bereich 38. Auch wird der Abstand b zu dem noch zu fräsenden Bereich 34 und der Abstand y zu dem bereits gefrästen Bereich 36 erfasst. Der Abstand b kann jedoch auch variieren, wenn z.B. der noch zu fräsende Bereich 34 in Querrichtung uneben ist. Durch die Vielzahl von Sensoren, die die Profilsensoreinrichtung 30 aufweist, können diese Unebenheiten detektiert werden. In Fig. 4 ist ferner auch die Frästiefe a angegeben. Es versteht sich jedoch von selbst, dass das dargestellte Bodenbelagsprofil lediglich beispielhaft ist. Neben dem zu fräsenden Bereich 34 können gefräste oder auch ungefräste Bodenbeläge angeordnet sein.

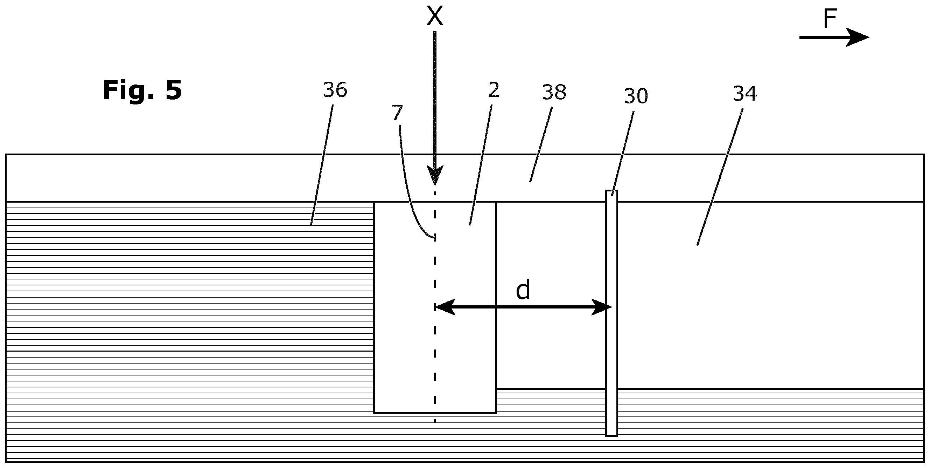

In Fig. 5 ist wieder eine rein schematische Draufsicht dargestellt, wobei lediglich die Profilsensoreinrichtung 30 und die Arbeitseinrichtung 2 von der Baumaschine 1 dargestellt sind, um die vorliegende Erfindung besser erläutern zu können. Die Baumaschine 1 hat sich um den Betrag d, der dem Abstand zwischen der Arbeitseinrichtung 2 und der Profilsensoreinrichtung 30 entspricht, bewegt und somit den Betrag d zurückgelegt. Nun misst zumindest eine zweite Sensoreinrichtung 40, 42 an dem ersten Ort X ein Abstandswert zwischen der Bodenoberfläche und der Arbeitseinrichtung 2, wobei die Auswerteeinrichtung, die in der Speichereinrichtung gespeicherten an dem zumindest einen ersten Ort X gemessenen Bodenbelagsprofildaten zu dem zumindest einem ersten Ort, mittels des zweiten Sensoreinrichtung 40,42 gemessenen Abstandswert referenziert.

Dies kann fortlaufend oder auch nachträglich durchgeführt werden. Die Überprüfung, ob die Strecke, die sich die Baumaschine 1 fortbewegt hat, dem Abstand d zwischen Arbeitseinrichtung und Profilsensoreinrichtung entspricht, kann beispielsweise mittels der Fahrgeschwindigkeit oder auch mittels Positionsdaten der Baumaschine 1 bestimmt werden.

Die zumindest eine zweite Sensoreinrichtung 40, 42 kann den Abstandswert zwischen Bodenoberfläche und Arbeitseinrichtung 2 indirekt oder direkt bestimmen. Eine indirekte Bestimmung kann beispielsweise durch Messen des Abstandswert zwischen Bodenoberfläche und einem Teil des Maschinenrahmens 3 erfolgen, wobei dies insbesondere der Fall ist, wenn die Arbeitseinrichtung 2 starr an dem Maschinenrahmen 3 angeordnet ist und die Höhenverstellung des Maschinenrahmens 3 mittels der Hubsäulen 6 erfolgen. Die Bestimmung des Abstandswerts zwischen Bodenoberfläche und Arbeitseinrichtung erfolgt vorzugsweise auf dem Bodenbelag, der neben der Arbeitseinrichtung 2 angeordnet ist. Dies kann beispielsweise auf dem ungefrästen Bereich 38 oder dem gefrästen Bereich 36 neben der Arbeitseinrichtung 2 erfolgen.

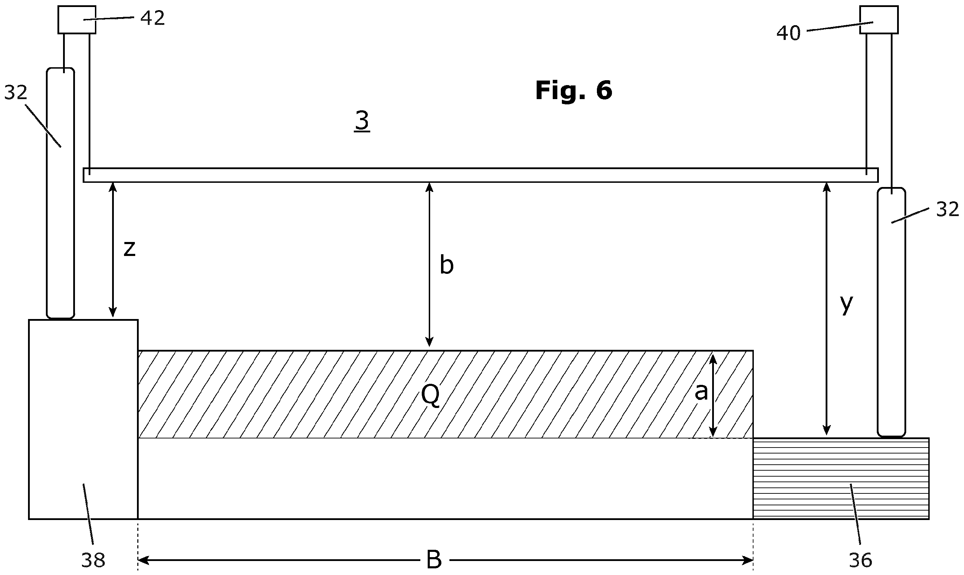

Dies ist beispielsweise in Fig. 6 dargestellt. Dort ist schematisch dargestellt, dass neben der Arbeitseinrichtung 2, die in Fig. 6 zur Übersichtlichkeit nicht dargestellt ist, jeweils ein sogenannter Kantenschutz 32 angeordnet ist. Dieser Kantenschutz ist gegenüber dem Maschinenrahmen 3 beweglich. Die Feststellung der Abstandsänderung zwischen Kantenschutz und Maschinenrahmen 3 kann z.B. mittels Seilzugsensoren 40,42 ermittelt werden. Auf diese Weise kann der Abstand zwischen dem Maschinenrahmen 3 und der Arbeitseinrichtung 2 bzw. dem Bodenbelag, der neben der Arbeitseinrichtung 2 angeordnet ist, ermittelt werden.

Die mittels dieser zweiten Sensoreinrichtungen 40, 42 ermittelten Abstandswerte können dann zur Referenzierung der mittels des Profilsensoreinrichtung 30 ermittelten Bodenbelagsprofils herangezogen werden.

Durch die zwei unabhängigen Messungen, die an der Stelle X durchgeführt wurden lässt sich feststellen, dass der mit der Profilsensoreinrichtung gemessene Abstand y (Fig. 4) einer Frästiefe von Null entspricht.

Aufgrund des erfassten Profils kann somit für jeden Punkt des Profils an der Stelle X eine korrespondierende Frästiefe ermittelt werden. Im dargestellten Fall ist die Frästiefe über die gesamte Fräsbreite B konstant, nämlich y - b = a

Alternativ zu Seilzugsensoren können z. B. auch Hydraulikzylindersensoren verwendet werden, die in Hubzylindern am Kantenschutz angeordnet sind. Als weitere Alternative könnten neben der Arbeitseinrichtung auch Ultraschalsensoren angeordnet sein.

Zusätzlich können auch noch Längs- und/oder Querneigungssensoren vorgesehen sein, die ebenfalls zur Referenzierung herangezogen werden. Besonders bevorzugt werden zumindest zwei Sensoreinrichtungen vorgesehen, die jeweils auf beiden Seiten neben der Arbeitseinrichtung 2 angeordnet sind, die jeweils die Abstandswerte zwischen Bodenoberfläche und Arbeitseinrichtung messen.

Durch die Referenzierung der mittels des Profilsensoreinrichtung 30 ermittelten Bodenbelagsprofils mit den von den zweiten Sensoreinrichtungen 40, 42 ermittelten Abstandswerten, lässt sich ein tatsächlich gefräster "Fräsquerschnitt" / abgearbeitete Bodenbelagsquerschnitt Q an der Position X ermitteln.

Die Referenzierung und somit Bestimmung des mittels der Arbeitseinrichtung abgearbeiteten Bodenbelagsquerschnitts Q kann in vorgegeben Abständen und somit fortlaufend erfolgen. Der Fräsquerschnitt bzw. abgearbeitete Bodenbelagsquerschnitts multipliziert mit der Weglänge zwischen den Messungen des Bodenbelagsquerschnitts (z. B. 10 cm) ergibt ein Teilvolumen, diese so ermittelten Teilvolumina können dann zu einem Gesamtvolumen aufsummiert und somit die Arbeitsleistung der Baumaschine ermittelt werden.

Je kleiner der Abstand zwischen den Messungen des Bodenbelagsquerschnitts gewählt wird, umso präziser lässt sich dabei das Volumen bestimmen.

Es kann auch vorgesehen sein, dass die Abstände zwischen der Bestimmung des Bodenbelagsquerschnitts variabel vorgegeben wird, bspw. in Abhängigkeit von der Welligkeit / Unregelmäßigkeit der zu bearbeitenden Bodenbelagsoberfläche.

Wird beispielsweise mit einer Straßenfräsmaschine im Wesentlichen bei konstanter Frästiefe und Fräsbreite gefräst kann ein großer Abstand gewählt werden. Ist die Oberfläche unregelmäßig, oder ändert sich die Breite des abzufräsenden Bereichs während des Fräsprozesses sollte der Abstand kleiner gewählt werden.

Hierzu kann der Maschinenbediener eine Erfassungsfrequenz vorgeben.

Alternativ kann die Steuerungseinheit selbstständig anhand der Häufigkeit von Änderungen im Fräsquerschnitt bestimmen, ob die Erfassungsfrequenz erhöht, oder erniedrigt werden sollte.

## Patentansprüche

1. Selbstfahrende Baumaschine (1), insbesondere Straßenfräsmaschine, Recycler, Stabilisierer oder Surface Miner, mit
- einem Maschinenrahmen (3),
- zumindest drei Fahreinrichtungen (5),
- zumindest einer Arbeitseinrichtung (2), insbesondere einer Fräswalze, zum Bearbeiten des Bodenbelags (53),
- mindestens einer Profilsensoreinrichtung (30) zum Messen zumindest eines quer zur Fahrtrichtung (F) verlaufenden Bodenbelagsprofils, wobei die Profilsensoreinrichtung (30) in Fahrtrichtung (F) vor der Arbeitseinrichtung (2) angeordnet ist,
- einer Auswerteeinrichtung (50) und eine mit dieser verbundenen Speichereinrichtung (52), wobei die Auswerteeinrichtung (50) mit der Profilsensoreinrichtung (30) in Verbindung steht und die von der Profilsensoreinrichtung (30) gemessenen Bodenbelagprofildaten in der Speichereinrichtung gespeichert werden,
**dadurch gekennzeichnet,**
**dass** die Profilsensoreinrichtung (30) an zumindest einem ersten Ort (X) Bodenbelagprofildaten misst,
wobei zumindest eine zweite Sensoreinrichtung (40, 42) vorgesehen ist, die, nachdem die Baumaschine (1) eine Strecke entsprechend dem Abstand (d) zwischen der Arbeitseinrichtung (2) und der Profilsensoreinrichtung (30) zurückgelegt hat, an dem ersten Ort (X) zumindest einen Abstandswert zwischen Bodenoberfläche und Arbeitseinrichtung (2) bestimmt,
wobei die Auswerteeinrichtung (50), die in der Speichereinrichtung (52) gespeicherten an dem zumindest einen ersten Ort (X) gemessenen Bodenbelagprofildaten zu dem zumindest einen an dem ersten Ort mittels der zweiten Sensoreinrichtung (40, 42) gemessenen Abstandswert referenziert.

2. Baumaschine nach Anspruch 1, **dadurch gekennzeichnet, dass** die zumindest eine zweite Sensoreinrichtung (40) den Abstandswert zwischen Bodenoberfläche und Arbeitseinrichtung (2) indirekt durch Messen des Abstandswertes zwischen Bodenoberfläche und einem Teil des Maschinenrahmens (3) ermittelt.

3. Baumaschine nach Anspruch 2, **dadurch gekennzeichnet, dass** die zumindest eine zweite Sensoreinrichtung (42) den Abstand zu einer Bodenoberfläche erfasst, die in Fahrtrichtung (F) neben der Arbeitseinrichtung (2) angeordnet ist.

4. Baumaschine nach Anspruch 2 oder 3, **dadurch gekennzeichnet, dass** die zumindest eine zweite Sensoreinrichtung (40) an einem neben der Arbeitseinrichtung (2) angeordneten Kantenschutz (32) angeordnet ist.

5. Baumaschine nach einem der Ansprüche 1 bis 4, **dadurch gekennzeichnet, dass** zumindest zwei zweite Sensoreinrichtungen (40, 42) vorgesehen sind, die jeweils einen Abstandswert zwischen Bodenoberfläche und Arbeitseinrichtung (2) messen.

6. Baumaschine nach einem der Ansprüche 1 bis 5, **dadurch gekennzeichnet, dass** zusätzlich zu der zumindest einen zweiten Sensoreinrichtung (40, 42), die den zumindest einen Abstandswert bestimmt, zumindest ein Längs- und/oder Querneigungssensor vorgesehen ist, wobei die Auswerteeinrichtung (50) die Längs- und/oder Querneigung zusätzlich zu dem zumindest einen Abstandswert zur Referenzierung heranzieht.

7. Baumaschine nach einem der Ansprüche 1 bis 6, **dadurch gekennzeichnet, dass** der Erfassungsbereich der Profilsensoreinrichtung eine Breite aufweist, die zumindest der Breite der Arbeitseinrichtung (2) entspricht.

8. Baumaschine nach einem der Ansprüche 1 bis 7, **dadurch gekennzeichnet, dass** die Profilsensoreinrichtung (30) mehrere nebeneinander angeordnete Abstandssensoren, insbesondere Lasersensoren, aufweist.

9. Baumaschine nach einem der Ansprüche 1 bis 8, **dadurch gekennzeichnet, dass** mindestens ein Entfernungssensor zum Erfassen der von der Baumaschine (1) zurückgelegen Entfernung vorgesehen ist.

10. Verfahren zur Bestimmung der Nutzung einer eine Arbeitseinrichtung (2), insbesondere Fräswalze, aufweisenden Baumaschine (1), wobei die Arbeitseinrichtung (2) an einem Maschinenrahmen (3) der Baumaschine (1) angeordnet ist, wobei das Verfahren die folgenden Schritte aufweist:
- Erfassen mindestens eines quer zur Fahrtrichtung der Baumaschine (1) verlaufenden Bodenbelagsprofils in Fahrtrichtung (F) vor der Arbeitseinrichtung (2) unter Verwendung mindestens einer Profilsensoreinrichtung (30),
- Speichern der gemessenen Bodenbelagprofildaten,
**dadurch gekennzeichnet,**
**dass** an zumindest einem ersten Ort (X) Bodenbelagprofildaten mittels der Profilsensoreinrichtung (30) gemessen werden,
wobei mittels zumindest einer zweiten Sensoreinrichtung (40, 42), nachdem die Baumaschine (1) eine Strecke entsprechend dem Abstand (d) zwischen Arbeitseinrichtung (2) und der Profilsensoreinrichtung (30) zurückgelegt hat, an dem zumindest einen ersten Ort (X) zumindest ein Abstandswert zwischen Bodenoberfläche und Arbeitseinrichtung (2) gemessen wird,
wobei die von der Profilsensoreinrichtung (30) an dem zumindest einen ersten Ort (X) gemessenen Bodenbelagprofildaten zu dem zumindest einen Abstandswert referenziert werden.

11. Verfahren nach Anspruch 10, **dadurch gekennzeichnet, dass** die Messung des zumindest einen Abstandwertes mit der zweiten Sensoreinrichtung (40, 42) an zumindest einem Kantenschutz (32) erfolgt.

12. Verfahren nach Anspruch 10 oder 11, **dadurch gekennzeichnet, dass** zumindest zwei zweite Abstandswerte an dem ersten Ort mittels zumindest zwei zweiter Sensoreinrichtung (40, 42) gemessen werden und zur Referenzierung herangezogen werden.

13. Verfahren nach einem der Ansprüche 10 bis 12, **dadurch gekennzeichnet, dass** zusätzlich zu dem zumindest einen Abstandswert zumindest eine Längs- und/oder Querneigung gemessen wird und zur Referenzierung herangezogen wird.

14. Verfahren nach einem der Ansprüche 10 bis 13, **dadurch gekennzeichnet, dass** die von der Baumaschine (1) zurückgelegen Entfernung erfasst wird.

15. Verfahren nach einem der Ansprüche 10 bis 14, **dadurch gekennzeichnet, dass** der zumindest eine Abstandswert zwischen Bodenoberfläche und Arbeitseinrichtung (2) direkt oder indirekt gemessen wird

## Claims

1. Self-propelled construction machine (1), in particular road milling machine, recycler, stabilizer or surface miner, comprising
- a machine frame (3),
- at least three travelling devices (5),
- at least one working device (2), in particular a milling drum, for working the ground pavement (53),
- at least one profile sensor device (30) for measuring at least one ground pavement profile extending transverse to the direction of travel (F), wherein the profile sensor device (30) is arranged in front of the working device (2) as seen in the direction of travel (F),
- an evaluation device (50) and a storage device (52) connected to the same, wherein the evaluation device (50) is connected to the profile sensor device (30) and the ground pavement profile data measured by the profile sensor device (30) are stored in the storage device,
**characterized in that**
the profile sensor device (30) measures ground pavement data in at least one first location (X),
wherein at least one second sensor device (40, 42) is provided which, after the construction machine (1) has travelled a section corresponding to the distance (d) between the working device (2) and the profile sensor device (30), determines, in the first location (X), at least one distance value between the ground surface and the working device (2),
wherein the evaluation device (50) references the ground pavement profile data stored in the storage device (52) measured in the at least one first location (X) to the at least one distance value measured in the first location by means of the second sensor device (40, 42).

2. Construction machine in accordance with claim 1, **characterized in that** the at least one second sensor device (40) determines the distance value between the ground surface and the working device (2) indirectly through measuring the distance value between the ground surface and a part of the machine frame (3).

3. Construction machine in accordance with claim 2, **characterized in that** the at least one second sensor device (42) detects the distance to a ground surface that is arranged next to the working device (2) as seen in the direction of travel (F).

4. Construction machine in accordance with claim 2 or 3, **characterized in that** the at least one second sensor device (40) is arranged on an edge protection (32) arranged next to the working device (2).

5. Construction machine in accordance with one of the claims 1 to 4, **characterized in that** at least two second sensor devices (40, 42) are provided, which each measure one distance value between the ground surface and the working device (2).

6. Construction machine in accordance with one of the claims 1 to 5, **characterized in that**, in addition to the at least one second sensor device (40, 42), which determines the at least one distance value, at least one longitudinal and/or transverse inclination sensor is provided, wherein the evaluation device (50) uses the longitudinal and/or transverse inclination in addition to the at least one distance value for referencing purposes.

7. Construction machine in accordance with one of the claims 1 to 6, **characterized in that** the area of detection of the profile sensor device exhibits a width which corresponds, as a minimum, to the width of the working device (2).

8. Construction machine in accordance with one of the claims 1 to 7, **characterized in that** the profile sensor device (30) comprises a plurality of distance sensors, in particular laser sensors, arranged next to one another.

9. Device in accordance with one of the claims 1 to 8, **characterized in that** at least one distance sensor is provided for detecting the distance travelled by the construction machine (1).

10. Method for determining the utilization of a construction machine (1) comprising a working device (2), in particular milling drum, wherein the working device (2) is arranged on a machine frame (3) of the construction machine (1), wherein the method comprises the following steps:
- detecting at least one ground pavement profile extending transverse to the direction of travel of the construction machine (1) in front of the working device (2) as seen in the direction of travel (F) using at least one profile sensor device (30),
- storing the measured ground pavement profile data,
**characterized in that**
in at least one first location (X), ground pavement profile data are measured by means of the profile sensor device (30),
wherein, by means of at least one second sensor device (40, 42), after the construction machine (1) has travelled a section corresponding to the distance (d) between the working device (2) and the profile sensor device (30), at least one distance value between the ground surface and the working device (2) is measured in the at least one first location (X),
wherein the ground pavement profile data measured by the profile sensor device (30) in the at least one first location (X) are referenced to the at least one distance value.

11. Method in accordance with claim 10, **characterized in that** the measurement of the at least one distance value by the second sensor device (40, 42) is effected on at least one edge protection (32).

12. Method in accordance with claim 10 or 11, **characterized in that** at least two second distance values are measured in the first location by means of at least two second sensor devices (40, 42) and are used for referencing purposes.

13. Method in accordance with one of the claims 10 to 12, **characterized in that**, in addition to the at least one distance value, at least one longitudinal and/or transverse inclination is measured and is used for referencing purposes.

14. Method in accordance with one of the claims 10 to 13, **characterized in that** the distance travelled by the construction machine (1) is detected.

15. Method in accordance with one of the claims 10 to 14, **characterized in that** the at least one distance value between the ground surface and the working device (2) is measured either directly or indirectly.

## Revendications

1. Engin de chantier automoteur (1), en particulier fraiseuse routière, recycleur, stabilisatrice ou surface miner, doté
- d'un châssis de machine (3),
- d'au moins trois dispositifs de conduite (5),
- d'au moins un dispositif de travail (2), en particulier d'un tambour de fraisage, destiné au traitement du revêtement de sol (53),
- d'au moins un dispositif de capteur de profil (30) destiné à mesurer au moins un profil de revêtement de sol transversal à la direction de déplacement (F), dans lequel le dispositif de capteur de profil (30) est disposé devant le dispositif de travail (2) dans la direction de déplacement (F),
- d'un dispositif de contrôle (50) et d'un dispositif de mémoire (52) relié à celui-ci, dans lequel le dispositif de contrôle (50) est en liaison avec le dispositif de capteur de profil (30) et les données de profil de revêtement de sol mesurées par le dispositif de capteur de profil (30) sont enregistrées dans le dispositif de mémoire, **caractérisé**
**en ce que** le dispositif de capteur de profil (30) mesure des données de profil de revêtement de sol sur au moins un premier lieu (X),
dans lequel au moins un deuxième dispositif de capteur (40, 42) est prévu, lequel, après que l'engin de chantier (1) a parcouru un trajet correspondant à la distance (d) entre le dispositif de travail (2) et le dispositif de capteur de profil (30), détermine sur le premier lieu (X) au moins une valeur de distance entre la surface du sol et le dispositif de travail (2),
dans lequel le dispositif de contrôle (50) réfère les données les données de profil de revêtement de sol mesurées sur l'au moins un premier lieu (X) et enregistrées dans le dispositif de mémoire (52) à l'au moins une valeur de distance mesurée sur le premier lieu au moyen du deuxième dispositif de capteur (40, 42).

2. Engin de chantier selon la revendication 1, **caractérisé en ce que** l'au moins un deuxième dispositif de capteur (40) détermine la valeur de distance entre la surface du sol et le dispositif de travail (2) indirectement par mesure de la valeur de distance entre la surface du sol et une pièce du châssis de machine (3).

3. Engin de chantier selon la revendication 2, **caractérisé en ce que** l'au moins un deuxième dispositif de capteur (42) saisit la distance par rapport à une surface de sol qui est disposée à côté du dispositif de travail (2) dans la direction de déplacement (F).

4. Engin de chantier selon la revendication 2 ou 3, **caractérisé en ce que** l'au moins un deuxième dispositif de capteur (40) est disposé sur une protection de bord (32) disposée à côté du dispositif de travail (2).

5. Engin de chantier selon l'une des revendications 1 à 4, **caractérisé en ce qu'**au moins deux deuxièmes dispositifs de capteur (40, 42) sont prévus, lesquels mesurent respectivement une valeur de distance entre la surface du sol et le dispositif de travail (2).

6. Engin de chantier selon l'une des revendications 1 à 5, **caractérisé en ce qu'**outre l'au moins un deuxième dispositif de capteur (40, 42), lequel détermine l'au moins une valeur de distance, au moins un capteur d'inclinaison longitudinale et/ou transversale est prévu, dans lequel le dispositif de contrôle (50) utilise pour référence l'inclinaison longitudinale et/ou transversale outre l'au moins une valeur de distance.

7. Engin de chantier selon l'une des revendications 1 à 6, **caractérisé en ce que** la zone de saisie du dispositif de capteur de profil présente une largeur qui correspond au moins à la largeur du dispositif de travail (2) .

8. Engin de chantier selon l'une des revendications 1 à 7, **caractérisé en ce que** le dispositif de capteur de profil (30) présente plusieurs capteurs de distance disposés l'un à côté de l'autre, en particulier des capteurs laser.

9. Engin de chantier selon l'une des revendications 1 à 8, **caractérisé en ce qu'**est prévu au moins un télémètre destiné à saisir la distance parcourue par l'engin de chantier (1).

10. Procédé de détermination de l'utilisation d'un engin de chantier (1) présentant un dispositif de travail (2), en particulier un tambour de fraisage, dans lequel le dispositif de travail (2) est disposé sur un châssis de machine (3) de l'engin de chantier (1), dans lequel le procédé présente les étapes suivantes :
- saisie d'au moins un profil de revêtement de sol transversal à la direction de déplacement (F) de l'engin de chantier (1) devant le dispositif de travail (2) dans la direction de déplacement en utilisant au moins un dispositif de capteur de profil (30),
- enregistrement des données de profil de revêtement de sol,
**caractérisé**
**en ce que** des données de profil de revêtement de sol sont mesurées au moins sur le premier lieu (X) au moyen du dispositif de capteur de profil (30),
dans lequel au moyen d'au moins un deuxième dispositif de capteur (40, 42), après que l'engin de chantier (1) a parcouru un trajet correspondant à la distance (d) entre le dispositif de travail (2) et le dispositif de capteur de profil (30), au moins une valeur de distance entre la surface du sol et le dispositif de travail (2) est mesurée sur l'au moins un premier lieu (X),
dans lequel les données de profil de revêtement de sol mesurées par le dispositif de capteur de profil (30) sur l'au moins un premier lieu (X) sont référées à l'au moins une valeur de distance.

11. Procédé selon la revendication 10, **caractérisé en ce que** la mesure de l'au moins une valeur de distance s'effectue avec le deuxième dispositif de capteur (40, 42) sur au moins une protection de bord (32).

12. Procédé selon la revendication 10 ou 11, **caractérisé en ce qu'**au moins deux deuxièmes valeurs de distance sont mesurées sur le premier lieu au moyen d'au moins deux deuxièmes dispositifs de capteur (40, 42) et sont utilisées pour référence.

13. Procédé selon l'une des revendications 10 à 12, **caractérisé en ce que** l'inclinaison longitudinale et/ou transversale est utilisée pour référence en outre de l'au moins une valeur de distance.

14. Procédé selon l'une des revendications 10 à 13, **caractérisé en ce que** le trajet parcouru par l'engin de chantier (1) est saisi.

15. Procédé selon l'une des revendications 10 à 14, **caractérisé en ce que** l'au moins une valeur de distance entre la surface de sol et le dispositif de travail est mesurée directement ou indirectement.
